# EUROPÄISCHE PATENTANMELDUNG

(11) **EP 1 215 703 A1**
(43) Veröffentlichungstag der Anmeldung: **19.06.2002**
(21) Anmeldenummer: 00127320.0
(22) Anmeldetag: 13.12.2000
(51) Int. Cl.: H01J 29/18, H01J 29/20, C09K 11/02

(54) **Bildschirm, insbesondere Farbbildschirm, Beschichtung desselben und Mittel zur Herstellung der Beschichtung**

(71) Anmelder: dmc2 Degussa Metals Catalysts Cerdec AG, 60287 Frankfurt am Main (DE)
(72) Erfinder: Letschert, Hans-Peter, 63450 Hanau (DE)
(74) Vertreter: Reinhardt, Markus, Dipl.-Ing.

(57) **Zusammenfassung**

Die Erfindung betrifft einen Bildschirm, insbesondere Farbbildschirm, auf der Basis eines Bildschirmträgers mit einer ein- oder mehrschichtigen Beschichtung, welche einen roten Leuchtstoff und ein Farbpigment enthält. Die Erfindung richtet sich ferner auf die Bildschirmbeschichtung, Mittel zu deren Herstellung und einen hierfür verwendbaren beschichteten roten Leuchtstoff.

Erfindungswesentliches Merkmal aller Gegenstände ist die Anwesenheit von rotem Tantal(V)-nitrid als Pigment zur Erhöhung des Kontrastes und Minderung der Reflexion.

## Beschreibung

Die Erfindung betrifft einen Bildschirm, insbesondere Farbbildschirm, auf der Basis eines Bildschirmträgers mit einer ein- oder mehrschichtigen Beschichtung, welche einen roten Leuchtstoff und ein Farbpigment enthält. Die Erfindung richtet sich ferner auf eine ein- oder mehrschichtige Bildschirmbeschichtung, Mittel zur Herstellung der Bildschirmbeschichtung, darunter einen beschichteten roten Leuchtstoff. Weitere Gegenstände richten sich auf die Herstellung des Bildschirms und seiner Beschichtung sowie auf die Herstellung des beschichteten Leuchtstoffs.

Bildschirme, wie Farbbildschirme, Farbmonitore und Plasma-Display-Panels werden häufig in hellerem Umgebungslicht benutzt. Um das Schirmbild bei dieser Beleuchtung besser sichtbar zu machen und um die Augen weniger zu ermüden, soll der Bildschirm blendfrei, reflexionsarm und kontrastreich sein. Man kann den Kontrast maximieren, indem man den Außenlichteinfluß im Vergleich zur Eigenlichtdichte der Leuchtstoffe in der Bildschirmbeschichtung erhöht. Dies kann man zum Beispiel durch Farbfilter in Form anorganischer Pigmente erreichen, die so ausgewählt werden, daß sie für die vom jeweiligen Leuchtstoff emittierte Farbe möglichst transparent sind und die restlichen Spektralanteile absorbieren, so daß die diffuse Reflexion des Außenlichtes an dem Leuchtstoffpulver unterdrückt wird.

Ein Farbpigment, das zwecks Erzielung der Filterwirkung zum Einsatz in einer Bildschicht oder Filterschicht oder zur Pigmentierung eines Leuchtstoffes geeignet ist, muß Absorptionseigenschaften haben, die die Emissionscharakteristik des Leuchtstoffes nicht negativ beeinflussen. Weiterhin wird von einer Pigmentierung in einer Bild- oder Filterschicht oder für Leuchtstoffbeschichtungen gefordert, daß sie im Vakuum stabil ist, durch Elektronenbeschuss oder Gasentladungen nicht degradiert wird, inert gegen reduzierende, oxidierende oder hydrolisierende Reagenzien ist und sich bei erhöhter Temperatur nicht zersetzt.

Aus der DE-Offenlegungschrift 199 01 539 ist ein Farbbildschirm mit einem roten Leuchtstoff und einem roten bis gelben Oxidnitrid-Pigment der in diesem Dokument genannten Formeln, bekannt. Geeignet sind zum Beispiel Oxidnitride der allgemeinen Formel A_{1-X}A'_{X}BO_{2-X}N_{1+X} mit A = Mg, Ca, Ba, Sr, Zn, A' = La oder anderes Lanthanidenelement, Bi, Al, Fe; B = V, Nb, Ta, Mo, W und O <x <1. Das Pigment ist in einer bindemittelhaltigen Beschichtung auf dem roten Leuchtstoff enthalten. Ein derartiges Oxidnitrid und ein roter Leuchtstoff in der Beschichtung eines Farbbildschirms liefert ein kontrastreiches und reflextionsarmes Bild. Obgleich durch die Wahl des O/N-Verhältnisses im Oxidnitrid die Farbe im Bereich von gelb bis rot und damit auch das Absorptionsspektrum variiert werden kann, handelt es sich um sehr komplexe Verbindungen; zudem besteht für rote Leuchtstoffe nur ein Bedarf an roten Pigmenten.

Aufgabe der Erfindung ist es demgemäß, einen weiteren Bildschirm, insbesondere Farbbildschirm, mit einer einen roten Leuchtstoff und ein rotes Pigment enthaltenden Bildschirmbeschichtung. Das rote Pigment sollte einen einfacheren chemischen Aufbau aufweisen als die für diesen Zweck bekannten Oxidnitride mit drei und mehr Kationen. Zudem sollte das Pigment durch eine möglichst scharfe Absorptionskante ausgezeichnet sein. Der Bildschirm mit dem roten Pigment sollte ein kontrastreiches Bild liefern, eine geringe Reflektanz für externes Licht besitzen und eine hohe Emissionsleuchtdichte und gute Emissionsfarbqualität aufweisen.

Die genannten Aufgaben sowie weitere Aufgaben, wie sie sich aus der weiteren Beschreibung ergeben, werden durch die anspruchsgemäßen Gegenstände gelöst.

Gefunden wurde ein Bildschirm, insbesondere Farbbildschirm, umfassend einen Bildschirmträger und eine ein- oder mehrschichtige Bildschirmbeschichtung, welche einen roten Leuchtstoff und ein Farbpigment enthält, der dadurch gekennzeichnet ist, dass das als Farbpigment Tantal(V)-nitrid (Ta₃N₅), das mit einem oxidischen Material beschichtet sein kann, anwesend ist.

Die Unteransprüche richten sich auf bevorzugte Ausführungsformen. Weitere Ansprüche richten sich auf die Beschichtung, Mittel zu deren Herstellung, beschichtete Leuchtstoffe und deren Herstellung. Wesentliches Merkmal der Erfindung in allen Ausführungsformen ist die Präsenz von rotem Tantal (V)-nitrid-Pigment (Ta₃N₅), das auch beschichtet sein kann. Tantal(V)-nitrid ist demnach ein Mittel zur Herstellung des Bildschirms sowie der beschichteten Leuchtstoffe.

Tantal(V)-nitrid für die Verwendung in einem erfindungsgemäßen Bildschirm und zur Herstellung beschichteter Leuchtstoffe lässt sich durch Nitridierung einer oxidischen Tantal(V)-Verbindung mit trockenem Ammoniak gewinnen. Gemäß EP 0 592 867 B1 wird Tantal(V)-oxidhydrat der Formel Ta₂O₅·aq nitridiert. Eine bessere Pigmentqualität wird durch Nitridierung von Tantal(V)-oxid in Gegenwart eines Oxids, wie SiO₂, erzielt - EP 1 031 536 A1.

Gemäß einer ersten Ausführungsform befindet sich Tantal(V)-nitrid in einer Farbfilterschicht, welche zwischen einer den roten Leuchtstoff enthaltenden Bildschirmschicht und dem Bildschirmträger oder dem mit einer Schwarzmatrix überzogenen Bildschirmträger angeordnet ist.

Gemäß einer zweiten Ausführungsform befinden sich das Ta₃N₅-Pigment und der rote Leuchtstoff gemeinsam nebeneinander in einer Bildschirmschicht.

Gemäß einer dritten, besonders bevorzugten Ausführungsform, befindet sich Tantal(V)-nitrid in einer anorganischen oder organischen Beschichtung auf den roten Leuchtstoffpartikeln. Die Bildschirmbeschichtung enthält die so beschichteten Leuchtstoffpartikel in der wirksamen Bildschirmschicht, die ihrerseits unmittelbar auf dem Bildschirmträger oder auf einem mit einer Schwarzmatrix und/oder einer oder mehreren Filterschichten beschichteten Bildschirmträger angeordnet ist.

Bei dem Material des Bildschirmträgers handelt es sich um ein unter den Betriebsbedingungen des Bildschirms, wie Vakuum, Elektronenstrahlung, Gasentladungen, stabiles Material. Beispiele sind Glas, Keramik, Metall und glasierte Metalle; besonders bevorzugt besteht der Bildschirmträger aus Glas. Zweckmäßigerweise ist ein Bildschirmträger aus Glas auf der Rückseite mit einem Metallfilm, wie Aluminiumfilm, überzogen.

Bevorzugte Farbbildschirme enthalten in einer oder mehreren Schichten Leuchtstoffe in den Primärfarben Blau, Rot und Grün und zusätzlich mindestens ein Pigment in einer der Primärfarben, vorzugsweise je ein Pigment in allen drei Primärfarben. Erfindungsgemäß handelt es sich bei dem roten Pigment um Tantal(V)-nitird. Gemäß einer bevorzugten Ausführungsform eines erfindungsgemäßen Bildschirms enthält die wirksame Bildschicht einen beschichteten roten Leuchtstoff mit Tantal(V)-nitrid-Pigment in der Beschichtung. Bei Bedarf sind auch der blaue und/oder grüne Leuchtstoff mit einem blauen bzw. grünen Pigment beschichtet. Alternativ hierzu können die auf den jeweiligen Leuchtstoff abgestimmten Pigmente in einer Filterschicht nebeneinander vorliegen.

Ein Farbbildschirm mit einem roten Leuchtstoff und einem Tantal(V)-nitrid-Pigment liefert ein kontrastreiches und reflexionsarmes Bild, weil die Absorptionseigenschaften von Tantal(V)-nitrid sehr gut zu den Emissionseigenschaften gewöhnlicher rot lumineszierender Leuchtstoffe passt. Der vorbekannte Stand der Technik gibt keine Anregung, anstelle von Oxidnitriden reines und leichter zugängliches Tantal(V)-nitrid, das auch beschichtet sein kann, zu verwenden.

Tantal(V)-nitrid zeichnet sich im Vergleich zu herkömmlichen Fe₂O₃-Pigmenten durch eine steilere Absorptionskante im rotorangen Spektralbereich und durch eine hohe Absorptivität aus und stellt eine Alternative zu den Oxidnitriden dar. Daher können die pigmenthaltigen Schichten dünn und die Pigmentmenge klein gehalten werden. Die erfindungsgemäßen Tantal(V)-nitrid-Pigmente sind einfach herzustellen und leicht in eine Bild- oder eine Filterschicht oder in eine Leuchtstoffbeschichtung einzuarbeiten. Sie haften gut auf der Oberfläche der bekannten roten Leuchtstoffe. Sie sind beständig gegen Elektronenstrahlung und Gasentladungen, haben einen sehr niedrigen Dampfdruck, eine ausreichende Temperaturbeständigkeit bis 700°C und sind nicht giftig.

Ein erfindungsgemäßer Bildschirm, insbesondere Farbbildschirm, die Bildschirmbeschichtung sowie ein beschichteter Leuchtstoff nach der Erfindung umfassen einen roten Leuchtstoff. Für die Erfindung können bekannte rot lumineszierende Leuchtstoffe verwendet werden. Beispiele sind dotierte Oxidhalogenide, wie YOCl:Eu, YOBr:Eu, LaOF:Eu oder Oxide, wie CaO:Eu, Y₂O₃:Eu, La₂O₃:Eu, ThO₂:Eu oder Borate, wie MgB₂O₄:Mn, SrB₂O₄:Sm, MgYBO₄:Eu, LaBO₃:Eu, LaAl₃B₄O₁₂:Eu, YAl₃B₄O₁₂:Eu oder Aluminate, wie LiAlO₂:Fe, YalO₃:Eu oder Silikate, wie Ca₂MgSi₂O₇:Eu, Mn oder Phosphate, wie Zn₃(PO₄)₂:Mn, MgBaP₂O₇:Eu, Mn oder Sulfate, wie SrSO₄:Bi oder Molybdate, Wolframate oder Vanadate, wie CaMoO₄:Eu, La₂W₃O₁₂:Eu, YVO₄:Eu, LaVO₄:Eu oder Sulfide und Oxidsulfide, wie ZnS:Mn, Te, ZnS:Sn, CaS:Eu, ZnGa₂S₄:Mn, Y₂O₂S:Eu.

Je nach Partikelgröße des Tantal(V)-nitrid-Pigments sind die damit hergestellten Farbfilterschichten transparent, transluzent oder nicht transparent. Tantal(V)-nitrid-Pigmente mit einer Partikelgröße, die klein genug ist, um zumindest teilweise transparente Schichten zu bilden, können nicht nur zur Pigmentierung der Leuchtstoffe, sondern auch als separate Farbfilterschicht zwischen Bildschirmnglas und Leuchtstoffschicht angebracht werden. Zweckmäßig ist eine mittlere Teilchengröße von kleiner 1 µm.

Gegenstand der Erfindung ist auch ein roter Leuchtstoff mit einer Tantal(V)-nitrid enthaltenden Beschichtung. Zweckmäßigerweise ist die Partikelgröße von Ta₃N₅ so klein, dass die Beschichtung für das vom Leuchtstoff emittierte Licht transparent oder transluzent ist. Vorzugsweise ist die Partikelgröße des Ta₃N₅-Pigments kleiner als 1 µm, insbesondere um/unter 0,5 µm. Das Mengenverhältnis von Ta₃N₅-Pigment zu rotem Leuchtstoff liegt üblicherweise im Bereich von 1 zu 1000 bis 1 zu 10, Werte außerhalb dieser Grenzen werden aber nicht ausgeschlossen. Besonders bevorzugt liegt das Verhältnis im Bereich von 1 zu 500 bis 1 zu 50. Die Beschichtung des roten Leuchtstoffes enthält außer dem roten Ta₃N₅-Pigment ein anorganisches oder organisches Bindemittel, mit dessen Hilfe das Pigment auf dem Leuchtstoff fixiert ist. Damit wird beim Einsatz in einem Farbbildschirm eine bezüglich Kontrastreichtum und Reflexionsarmut optimales Ergebnis erzielt.

Die Herstellung des Ta₃N₅-Pigment enthaltenden beschichteten roten Leuchtstoffs umfasst die Stufen: gemeinsames oder getrenntes Suspendieren von Tantal(V)-nitrid-Pigment und rotem Leuchtstoff in An- oder Abwesenheit eines anorganischen oder/und organischen Bindemittels oder Vorstufe eines solchen in einem wässrigen Medium und, sofern getrennte Suspension erzeugt wurde, Vereinigen derselben, wobei die Tantal(V)-nitrid und roten Leuchtstoff enthaltende Suspension zwecks Ausbildung der Leuchtstoffbeschichtung und Fixierung des Pigments in dieser ein anorganisches und/oder organisches Bindemittel oder Bindemittelvorstufe anwesend ist, im Falle der Anwesenheit einer Bindemittelvorstufe Einstellen von Bedingungen zur Überführung der Vorstufe in das Bindemittel, Abtrennen des Feststoffes von der wässrigen Phase und Trocknen des Feststoffes.

Das Verfahren umfasst somit eine mechanische Zerkleinerung agglomerierter Partikel. Bevorzugt werden Pigment und Leuchtstoff getrennt voneinander in Gegenwart eines Bindemittels desagglomeriert und so stabile Suspensionen erzeugt. Bindemittel zur Fixierung des Pigments auf dem Leuchtstoff sind anorganischer und/oder organischer Natur. Bei den Bindemitteln handelt es sich um dem Fachmann bekannte Systeme, welche beim Trocknen oder durch eine Kondensationsreaktion von schichtbildenden Vorstufen eine zusammenhängende Schicht zu bilden vermögen. Bei dem organischen Bindemittel handelt es sich insbesondere um Polymere aus der Reihe Gelatine, Acryl- und Methacrylsäurepolymere und Copolymere, Melaminharze, Harnstoffharze, Polyurethane und Polyester. Unter den anorganischen Bindemitteln sind insbesondere solche auf der Basis von Oxiden, wie Kieselsäure,zu verstehen. Eine Kieselsäureschicht wird dabei aus einer geeigneten Vorstufe, wie Wasserglas oder einem Alkoxysilan, gebildet, indem durch pH-Einstellung und/oder thermische Behandlung die Hydrolyse und Kondensation bewirkt wird.

Eine bevorzugte Ausführung der Herstellung beschichteter Leuchtstoffe umfasst folgende Schritte: Rote Leuchtstoffe, wie zum Beispiel Y₂O₂S:Eu, werden in alkalischer Lösung (pH 8,5 bis 9,5) mit geeigneten Mahlhilfen desagglomeriert. Dabei kann die Zugabe von Alkalimetallsilicaten (0.01 bis 0.1 Gew.-%), kleinteiligem kolloidalem SiO₂ (0.01 bis 0.1 Gew.-%, Partikeldurchmesser: 10 bis 40 nm) oder organischen Polymeren (Gelatine, Acrylsäuren, Melaminharze, Harnstoffharze, Polyurethane etc., 0.01 bis 0.1 Gew.-%) hilfreich sein. Nach der Desagglomeration ist die Leuchtstoffsuspension im neutralen bis schwach alkalischen pH-Bereich stabil. Die oben aufgeführten Tantal(V)-nitrid - Pigmente werden ebenfalls mit geeigneten Mahlkörpern und Zugabe von Alkalimetallsilicaten (0.01 bis 0.05 Gew.-%, bezogen auf den zu pigmentierenden Leuchtstoff), kleinteiligem kolloidalem SiO₂ (0.01 bis 0.05 Gew.-%, bezogen auf den zu pigmentierenden Leuchtstoff, Partikeldurchmesser: 10 bis 40 nm) und/oder einem organischen Polymer (Gelatine, Acrylsäuren, Melaminharze, Harnstoffharze, Polyurethane; 0.01 bis 0.1 Gew.-%, bezogen auf den zu pigmentierenden Leuchtstoff) desagglomeriert.

Gemäß einer weiteren Ausführungform, welche sich sowohl für die Herstellung des erfindungsgemäßen Bildschirms als auch zur Herstellung Ta₃N₅ enthaltender beschichteter Leuchtstoffe eignet, wird das Tantal(V)-nitrid-Pigment in Form eines bereits mit einer dünnen Oxidschicht überzogenen Pigments eingesetzt. Ein solcher Überzug führt zu einer erhöhten Temperaturstabilität des Pigments (dies ist im Falle eines Einsatzes des Pigments in einem einzubrennenden Dekorsystem von Bedeutung). Bei dem Überzug kann es sich insbesondere im wesentlichen um Oxide aus der Reihe SiO₂, GeO₂, SnO₂, ZrO₂, HfO₂ oder um Mischoxide handeln. Geeignete Oxidvorstufen sind beispielsweise Di-, Tri- oder Tetraalkoxyverbindungen der genannten Elemente, sowie Lösungen der Oxide in Alkalilauge. Im erfindungsgemäßen Einsatzgebiet der Oxid-umhüllten Ta₃N₅-Pigmente handelt es sich bei dem Oxid bevorzugt um SiO₂; Oxide mit hohem Brechungsindex sind weniger geeignet.

Zur Beschichtung des Leuchtstoffes wird dieser, sofern dies nicht schon bei der Desagglomerierung geschah, zunächst mit einem Binder, welcher die Haftung des Pigments gewährleistet, überzogen. Als Bindersysteme können solche, wie sie auch für die herkömmliche Pigmentierung roter Leuchtstoffe mit Fe₂O₃ in Gebrauch sind, eingesetzt werden. Dies können, wie schon angeführt, anorganische Oxide oder Vorstufen hierfür aber auch organische Polymere, wie Gelatine, Acrylsäuren, Melaminharze, Harnstoffharze, Polyurethane sein. Bei neutralem pH-Wert kann daran anschließend eine stabile Pigmentsuspensionen langsam der Leuchtstoffsuspension zugetropft werden. Das Pigment haftet nach einiger Zeit zuverlässig auf der Oberfläche des Leuchtstoffes. Abschließend kann der pigmentierte Leuchtstoff mit weiteren anorganischen Oxiden, Vorstufen davon oder organischen Polymeren bedeckt werden.

Zur Herstellung des Farbbildschirms, die dem Fachmann bekannt ist, wird beispielsweise das Farbbildschirmglas zunächst mittels eines photolithographischen Verfahrens mit einem Muster einer Schwarzmatrix überzogen. Danach werden Raster der drei Primärfarben Blau, Rot und Grün unter Benutzung von Suspensionen pigmentierter Leuchtstoffe in drei aufeinanderfolgenden photolithographischen Schritten nach den bekannten Verfahren aufgebracht. Alternativ können der rote Leuchtstoff und Ta₃N₃ auch nebeneinander in einer Suspension vorliegen. Alternativ können die Leuchtstoffe auch in einem einzigen Druckverfahren aufgebracht werden.

Im Falle des Einsatzes einer Farbfilterschicht zwischen dem Farbbildschirmglas und der/den Leuchtstoffschichten werden die Leuchtstoffe nicht pigmentiert. Statt dessen wird in einem getrennten Schritt eine Schicht des Ta₃N₅-Pigments derart auf dem Schirmglas aufgebracht, daß diese zwischen dem Schirmglas und dem entsprechenden Leuchtstoffraster positioniert wird. Das Auftragen kann photolithographisch unter Benutzung von Suspensionen der Tantal(V)-nitrid-Pigmente oder alternativ durch ein Druckverfahren erfolgen.

Die fertige, alle drei Farben und eventuelle Farbfilterschichten umfassende Farbbildschirmbeschichtung kann für normale Anwendungen in Farbfernsehröhren oder Farbmonitoren mit einem Aluminiumfilm auf der Rückseite versehen und schließlich zur fertigen Röhre montiert werden.

Die erfindungsgemäßen Gegenstände zeichnen sich durch ihre hohe Effizienz bezüglich der Reduktion der Reflexion und Erhöhung ders Kontrastes aus. Das erfindungsgemäß zu verwendende Mittel, nämlich Tantal(V)-nitrid, ist leicht verfügbar und weist für rote Leuchtstoffe eine geeignete scharfe Absorptionskante auf.

### Ausführungsbeispiel 1

Eine stabile Suspension eines Tantal(V)-nitrid-Pigments wird erhalten, wenn 3,2 g Tantal(V)-nitrid mit 120 ml demineralisiertem Wasser und 3 ml einer 15 %igen Kaliumsilikatlösung gemischt und 4 Tage naß gemahlen werden. Weiterhin werden 800 g rotes Y₂O₂S:Eu-Leuchtstoffpulver grob gesiebt und mehrfach mit demineralisiertem Wasser gewaschen. Der so gereinigte Leuchtstoff wird mit demineralisiertem Wasser zu einer Suspension mit einem Volumen von 1 1 aufgefüllt. Der pH-Wert der Suspension wird mit 2-molarer Natronlauge auf einen Wert von 9.3 eingestellt. Ferner werden 8 ml einer Suspension mit 3 Gew.-% SiO₂ mit einem Partikeldurchmesser von 10 bis 40 nm zugegeben. Die vereinigten Suspensionen werden 30 min gerührt, anschließend werden Mahlkörper zugefügt und es wird 2 h naßgemahlen. Nach Abtrennen der Mahlkörper erhält man eine stabile Suspension mit einem Volumen von 3 1, deren pH-Wert mit 2-molarer Salzsäure auf 7.0 eingestellt wird. Die Suspension wird weitere 30 min gerührt und dann mit einer Lösung von 2,17 g Zinkacetat-Dihydrat in 50 ml Wasser versetzt. Anschließend wird der pH-Wert mit 2-molarer Natronlauge langsam auf 9,3 angehoben. Nach 30-minütigem Rühren stellt man mit 2-molarer Salzsäure auf einen pH-Wert von 7,3 ein. Nach weiteren 30 min tropft man unter Rühren langsam die Suspension des Tantal(V)-nitrid-Pigments zu. Der pH-Wert wird währendessen in einem Bereich von 6.8 bis 7.5 gehalten. Man rührt die Suspension eine weitere Stunde, läßt den pigmentierten Y₂O₂S:Eu-Leuchtstoff sedimentieren und filtriert ab. Der Filterkuchen wird nachfolgend dreimal mit je 100 ml demineralisiertem Wasser gewaschen. Der beschichtete Leuchtstoff wird dann 15 h bei 140 °C getrocknet und durch ein Sieb mit der Maschenweite 36 um gesiebt.

### Ausführungsbeispiel 2

Stabile Suspensionen mit einem rot leuchtenden Y₂O₂S:Eu-Leuchtstoffpulver, wie auch mit einem Tantal(V)-nitrid-Pigment werden wie in Ausführungsbeispiel 1 beschrieben hergestellt. Nach 30-minütigem Rühren gibt man zur stabilen Leuchtstoffsuspension (pH-Wert: 6,8 bis 7,2) eine Lösung von 0.8 g Gelatine in 200 ml warmem Wasser. Nach weiteren 30 Minuten tropft man unter Rühren langsam die stabile Pigmentsuspension zu. Der pH-Wert wird während der gesamten Zeit in einem Bereich von 6,8 bis 7,5 gehalten. Man rührt die Suspension eine weitere Stunde, läßt den pigmentierten Y₂O₂S:Eu-Leuchtstoff sedimentieren und filtriert ab. Der Filterkuchen wird nachfolgend dreimal je 100 ml demineralisierterm Wasser gewaschen. Der beschichtete Leuchtstoff wird dann etwa 15 h bei 140°C an der Luft getrocknet und mittels eines Stahlsiebs (Porenweite 36 µm) gesiebt.

## Patentansprüche

1. Bildschirm, insbesondere Farbbildschirm, umfassend einen Bildschirmträger und eine ein- oder mehrschichtige Bildschirmbeschichtung, welche einen roten Leuchtstoff und ein Farbpigment enthält,
**dadurch gekennzeichnet,**
**dass** als Farbpigment Tantal(V)-nitrid (Ta₃N₅), das mit einem oxidischen Material beschichtet sein kann, anwesend ist.

2. Bildschirm nach Anspruch 1,
**dadurch gekennzeichnet,**
**dass** Tantal(V)-nitrid in einer zwischen dem Bildschirmträger, der eine Schwarzmatrix aufweisen kann, und einer den roten Leuchtstoff enthaltenden Bildschirmschicht angeordneten Farbfilterschicht enthalten ist.

3. Bildschirm nach Anspruch 1 oder 2,
**dadurch gekennzeichnet,**
**dass** die Bildschirmbeschichtung Leuchtstoffe in einer oder mehreren Bildschichten in den Primärfarben Blau, Rot und Grün aufweist.

4. Bildschirm nach Anspruch 1 oder 3,
**dadurch gekennzeichnet,**
**dass** die Bildschirmbeschichtung einen Tantal(V)-nitrid-Pigment enthaltenden beschichteten roten Leuchtstoff enthält.

5. Bildschirm nach Anspruch 4,
**dadurch gekennzeichnet,**
**dass** die Bildschirmbeschichtung ein Raster mit den Primärfarben Blau, Rot und Grün aufweist, wobei es sich bei den Farben um beschichtete Leuchtstoffe handelt und die Beschichtung des roten Leuchtstoffs Tantal(V)-nitrid-Pigment enthält.

6. Bildschirm nach einem der Ansprüche 1 bis 5,
**dadurch gekennzeichnet,**
**dass** das Tantal(V)-nitrid in der Leuchtstoffbeschichtung oder in der Filterschicht in einer Transparenz oder teilweise Transparenz erlaubenden mittleren Partikeldurchmesser von kleiner 1 µm und Beschichtdicke anwesend ist.

7. Bildschirm nach einem der Ansprüche 1 bis 6,
**dadurch gekennzeichnet,**
**dass** der Bildschirmträger aus Glas besteht und die Bildschirmbeschichtung zusätzlich eine unmittelbare auf dem Glas angeordnete Schwarzmatrixschicht aufweist.

8. Bildschirmbeschichtung, enthaltend eine oder mehrere Schichten und einen roten Leuchtstoff und ein rotes Farbpigment in einer oder verschiedenen Schichten,
**dadurch gekennzeichnet,**
**dass** als Farbpigment Tantal(V)-nitrid anwesend ist.

9. Beschichteter roter Leuchtfarbstoff,
**dadurch gekennzeichnet,**
**dass** die Beschichtung Tantal(V)-nitrid enthält.

10. Beschichteter roter Leuchtstoff nach Anspruch 9,
**dadurch gekennzeichnet,**
**dass** die Beschichtung des Leuchtstoffes ein ausgehärtetes anorganisches und/oder organisches Bindemittel enthält.

11. Beschichteter roter Leuchtstoff nach Anspruch 9 oder 10,
**dadurch gekennzeichnet,**
**dass** es sich bei dem roten Leuchtstoff um eine Europium-dotierte anorganische Verbindung aus der Reihe der Oxidhalogenide, Oxide, Borate, Silikate, Phosphate und Sulfate oder ein Mn-, Te-, Sm- oder Eu-dotiertes Sulfid, Oxidsulfide und Vanadate handelt.

12. Beschichteter roter Leuchtstoff nach einem der Ansprüche 9 bis 11,
**dadurch gekennzeichnet,**
**dass** das Gewichtsverhältnis von Tantal(V)-nitrid im Bereich zu rotem Leuchtstoff von 1 zu 1000 bis 1 zu 10, insbesondere im Bereich von 1 zu 500 bis 1 zu 50 liegt.

13. Verfahren zur Herstellung eines Tantal(V)-nitrid enthaltenden beschichteten roten Leuchtstoffs gemäß einem der Ansprüche 9 bis 12,
umfassend
gemeinsames oder getrenntes Suspendieren von Tantal(V)-nitrid-Pigment und rotem Leuchtstoff in An- oder Abwesenheit eines anorganischen oder/und organischen Bindemittels oder Vorstufe eines solchen in einem wässrigen Medium und, sofern getrennte Suspension erzeugt wurde, Vereinigen derselben, wobei die Tantal(V)-nitrid und roten Leuchtstoff enthaltende Suspension zwecks Ausbildung der Leuchtstoffbeschichtung und Fixierung des Pigments in dieser ein anorganisches und/oder organisches Bindemittel oder Bindemittelvorstufe anwesend ist, im Falle der Anwesenheit einer Bindemittelvorstufe Einstellen von Bedingungen zur Überführung der Vorstufe in das Bindemittel, Abtrennen des Feststoffes von der wässrigen Phase und Trocknen des Feststoffes.
